# FASCICULE DE BREVET EUROPEEN

(11) **EP 2 900 541 B1**
(45) Date de publication et mention de la délivrance du brevet: **22.02.2017**
(21) Numéro de dépôt: 13773299.6
(22) Date de dépôt: 13.09.2013
(51) Int. Cl.: B62D 5/04

(54) **GESTION D'ASSISTANCE DE DIRECTION D'UN VEHICULE AUTOMOBILE**
SERVOLENKUNGSVERWALTUNG FÜR EIN KRAFTFAHRZEUG
POWER STEERING MANAGEMENT FOR A MOTOR VEHICLE

(30) Priorité: 28.09.2012 FR 1259173
(43) Date de publication de la demande: 05.08.2015
(73) Titulaire: Renault S.A.S., 92100 Boulogne-Billancourt (FR)
(72) Inventeur: PUGSLEY, Gareth, F-78390 Bois D'arcy (FR); ZAMMARCHI, Gino, F-27600 Gaillon (FR); TORRES, Guillaume, F-27000 Evreux (FR)
(86) Numéro de dépôt international: PCT/FR2013/052111
(87) Numéro de publication internationale: WO 2014/049222

(56) Documents cités:
- DE-A1-102011 011 000
- US-A1- 2009 229 909

## Description

L'invention concerne la gestion d'assistance de direction d'un véhicule automobile.

Il est bien connu de faciliter la conduite d'un véhicule automobile en rajoutant au couple directement généré par la position du volant un couple d'assistance. Les véhicules intégrant une telle direction assistée sont ainsi plus faciles à manier.

Or, selon la masse du véhicule, l'emplacement du moteur et l'accélération courante, le train avant du véhicule peut se trouver plus ou moins délesté. Par exemple, sur un véhicule relativement léger en masse train avant, de relativement fortes accélérations longitudinales peuvent avoir tendance à délester le train avant, de sorte que les roues sont moins en prise avec le sol en situation d'accélération que lorsque le véhicule est à l'arrêt. Ce délestage peut être accentué si le véhicule est à propulsion arrière ou à fort couple au démarrage, ce qui peut être le cas pour un véhicule à motorisation électrique.

Lorsque le train avant d'un véhicule se trouve ainsi délesté, si le conducteur tourne le volant, il risque d'avoir une sensation de flottement, du fait du couple d'assistance qui est appliqué par la direction assistée.

Les passagers peuvent ainsi avoir une sensation de flottement dans la direction car la direction assistée peut amener un trop fort déplacement du véhicule du fait de cet allègement de la masse train avant.

Il existe un besoin pour un procédé et/ou un dispositif permettant de réduire cette sensation de sur-assistance.

La publication US2009/229909-A1 décrit un procédé de gestion d'assistance de direction comprenant une étape de détermination d'une valeur de commande d'assistance de direction.

Il est proposé un procédé de gestion d'assistance de direction d'un véhicule automobile comprenant une étape consistant à déterminer une valeur de commande d'assistance de direction en fonction d'une valeur d'accélération du véhicule.

Ainsi, en prenant en compte l'accélération du véhicule, on pourra prévoir de réduire l'assistance au volant lorsque le véhicule subit de fortes accélérations et qu'en conséquence le train avant du véhicule est délesté.

Par exemple, on pourra prévoir de comparer la valeur d'accélération à un seuil, et d'adapter la valeur d'un couple d'assistance lorsque la valeur d'accélération est supérieure à ce seuil.

Avantageusement et de façon non limitative, on peut prévoir de déterminer la valeur de commande d'assistance de direction en fonction en outre d'une valeur d'angle volant du véhicule. En effet, pour une valeur d'angle volant proche de zéro, c'est-à-dire pour une trajectoire attendue relativement rectiligne, la moindre déviation par rapport à la trajectoire attendue sera plus perceptible que lorsque l'angle volant a une valeur relativement élevée, c'est-à-dire lorsque le véhicule est en train de tourner. Dit autrement, la sensibilité du conducteur est plus élevée lorsque l'angle volant a des valeurs relativement faibles. En prenant en compte la valeur d'angle volant pour déterminer la valeur de commande d'assistance de direction, on peut ainsi adapter l'assistance de direction à la sensibilité du conducteur. La prise en compte conjointe de l'accélération et de l'angle volant peut permettre de limiter encore davantage la sensation de sur-assistance du conducteur.

Avantageusement et de façon non limitative, le procédé peut comprendre une étape consistant à déterminer une valeur de gain en fonction de la valeur d'accélération du véhicule et/ou de la valeur d'angle volant du véhicule et une étape consistant à appliquer cette valeur de gain à une valeur initiale de couple d'assistance de façon à obtenir la valeur de commande d'assistance de direction.

La valeur de couple d'assistance peut être obtenue selon un procédé connu de l'art antérieur, par exemple en fonction du couple volant et en fonction de la vitesse du véhicule.

Avantageusement et de façon non limitative, la valeur de commande d'assistance est déterminée en utilisant une cartographie.

Avantageusement et de façon non limitative, la valeur de gain est déterminée à partir de la valeur d'accélération et à partir de la valeur d'angle volant en utilisant une cartographie.

On peut ainsi prévoir de conserver en mémoire une cartographie deux dimensions fournissant de valeurs de gain en fonction de valeurs d'accélération et de valeurs d'angle volant.

Par exemple, on peut conserver en mémoire des valeurs de triplets gain, accélération, angle volant.

Avantageusement et de façon non limitative, les données de la cartographie peuvent être choisies de façon à définir une zone dans laquelle le gain a une valeur constante sur toute la zone, par exemple une valeur prédéterminée.

Avantageusement et de façon non limitative, on peut prévoir de stocker en mémoire une pluralité de valeurs de doublets accélération, angle volant, cette pluralité de valeurs de doublets correspondant à une courbe délimitant la zone pour laquelle la valeur de gain est égale à une valeur prédéterminée, par exemple 1.

Ainsi, pour des points de fonctionnement définis par des valeurs respectives d'accélération, et des valeurs respectives d'angle volant d'un côté de cette courbe, par exemple en-dessous de cette courbe, la valeur de commande d'assistance de direction est égale à la valeur de couple d'assistance.

En stockant simplement une pluralité de valeurs de doublets, plutôt qu'un ensemble de points répartis sur toute la zone pour laquelle le gain est égal à la valeur prédéterminée, on peut limiter la taille mémoire dédiée au stockage de la cartographie.

On peut prévoir de conserver des valeurs de triplets gain, accélération, angle volant hors de cette zone pour laquelle le gain a une valeur prédéterminée.

Avantageusement et de façon non limitative, on peut prévoir de conserver en mémoire un ensemble de valeurs de doublets gain, angle volant, correspondant à une valeur d'accélération prédéterminée, par exemple 10 mètres par seconde au carré ou autre. Cet ensemble de valeurs correspond ainsi à une zone différente de la zone pour laquelle le gain est égal à la valeur prédéterminée, et peut permettre de caractériser, avec la courbe mentionnée ci-dessus, cette deuxième zone.

Avantageusement et de façon non limitative, le procédé peut comprendre une étape consistant à déterminer la valeur de gain par interpolation à partir de la valeur d'accélération du véhicule, de la valeur d'angle volant, et en utilisant la pluralité de valeurs de doublets accélération, angle volant et l'ensemble des valeurs de doublets gain, angle volant.

Ainsi, le nombre de valeurs stockées et correspondant à cette cartographie deux dimensions peut être relativement faible.

L'interpolation peut être par exemple linéaire ou non.

Les valeurs de doublets accélération, angle volant et/ou les valeurs de doublets gain, angle volant peuvent être déterminées empiriquement en fonction notamment du type de véhicule et du ressenti client souhaité.

L'invention n'est en rien limitée par la façon dont la valeur d'accélération est déterminée.

Avantageusement, et de façon non limitative, on pourra prévoir de recevoir des valeurs de vitesse de capteur et correspondant à au moins une roue non motrice. De telles valeurs de vitesse restent en effet peu affectées par un éventuel patinage des roues.

On pourra par exemple recevoir ces valeurs de vitesse d'un système ESC (de l'anglais 'Electronic Stability Control').

Avantageusement et de façon non limitative, le procédé peut comprendre une étape consistant à détecter les situations de fin d'adaptation de la commande d'assistance de direction avec l'accélération et/ou l'angle volant, par exemple en détectant un passage d'une valeur de gain inférieure à 1 à une valeur de gain égale à 1, ou bien encore en comparant les valeurs d'accélérations et/ou angle volant à un ou des seuils.

Le procédé peut comprendre une étape consistant à passer dans un mode de désactivation de l'adaptation, suite à cette détection, dans lequel on affecte au gain une valeur prédéterminée, par exemple 1, et ce, quelles que soient les valeurs d'accélération et/ou d'angle volant. On peut prévoir d'imposer ce mode d'inactivation de l'adaptation pendant une durée prédéterminée, par exemple 5 secondes, 10 secondes ou autre.

Ce procédé peut ainsi permettre d'éviter d'adapter l'assistance à la direction lorsque l'accélération est erronée ou que le conducteur accélère et freine de façon trop saccadée. En particulier, il est possible que l'accélération soit mal estimée selon les circonstances, par exemple des différences de surface de revêtement peuvent conduire à des estimations de l'accélération faussée. En interdisant d'adapter l'assistance de direction, on peut permettre d'améliorer le ressenti client.

Avantageusement et de façon non limitative, on peut prévoir d'estimer une durée d'adaptation continue de la commande d'assistance, par exemple en incrémentant un compteur tant que le gain présente une valeur inférieure à la valeur prédéterminée, ou bien tant que l'accélération présente une valeur supérieure à un seuil ou autre. On peut prévoir en outre une étape de comparaison de cette durée estimée à un seuil, et si cette durée estimée atteint ou dépasse ce seuil, on peut interdire l'adaptation de la commande d'assistance de direction (par exemple en passant dans le mode d'inactivation de l'adaptation, en imposant au gain une valeur prédéterminée, ou autre).

En effet, une valeur d'accélération trop élevée pendant trop longtemps peut résulter d'un artéfact. Ainsi, on interdit toute atténuation de la direction assistée lorsque l'accélération est trop élevée pendant trop longtemps afin d'éviter que le conducteur ne perçoive la diminution de l'assistance à la direction, qu'il pourrait considérer comme un dysfonctionnement.

Il est en outre proposé un produit programme d'ordinateur comprenant des instructions pour effectuer les étapes décrites ci-dessus lorsque ce programme est exécuté par un processeur.

Ce programme peut être stocké sur un support de type mémoire ou autre, téléchargé ou autre.

Il est en outre proposé un dispositif de gestion d'assistance de direction d'un véhicule automobile comprenant des moyens de réception d'une valeur d'accélération du véhicule, et des moyens de traitement agencés pour déterminer une valeur de commande d'assistance de direction en fonction de cette valeur d'accélération.

Avantageusement, le dispositif peut comprendre des moyens de réception ou d'estimation d'une valeur d'angle volant.

Les moyens de traitement peuvent avantageusement être agencés pour déterminer la valeur de commande d'assistance de direction en fonction en outre de la valeur d'angle volant du véhicule.

Un tel dispositif peut comprendre ou être intégré dans un processeur, par exemple un microcontrôleur, un microprocesseur, ou autre. Les moyens de réception peuvent par exemple comprendre des pins d'entrée, un port d'entrée, ou autre. Les moyens de traitement peuvent par exemple comprendre un coeur de processeur ou CPU (de l'anglais 'Central Processing Unit'), ou autre.

Il est en outre proposé un véhicule automobile intégrant le dispositif de gestion décrit ci-dessus, par exemple un véhicule électrique, essence, diesel, ou autre.

L'invention sera mieux comprise en référence aux figures, lesquelles illustrent des modes de réalisation non limitatifs.
La figure 1 montre un véhicule automobile selon un mode de réalisation de l'invention.
La figure 2 est un organigramme illustrant un exemple de procédé selon un mode de réalisation de l'invention.
La figure 3a est un graphique tridimensionnel montrant des valeurs de gain en fonction de l'accélération et de l'angle volant, pour une cartographie destinée à être utilisée dans un procédé selon un mode de réalisation de l'invention.
La figure 3b montre une première courbe issue du graphique de la figure 3a, avec en abscisse l'angle volant et en ordonnée l'accélération, cette première courbe correspondant aux valeurs limites entre une première zone pour laquelle le gain est égal à 100% et une deuxième zone pour laquelle le gain sera inférieur à 100%.
La figure 3c montre une deuxième courbe, également issue du graphique de la figure 3a, avec en abscisse des valeurs d'angle volant, et en ordonnée, des valeurs de gain, pour une valeur d'accélération donnée, et destinée à être utilisée pour déterminer des valeurs de gain dans la deuxième zone.

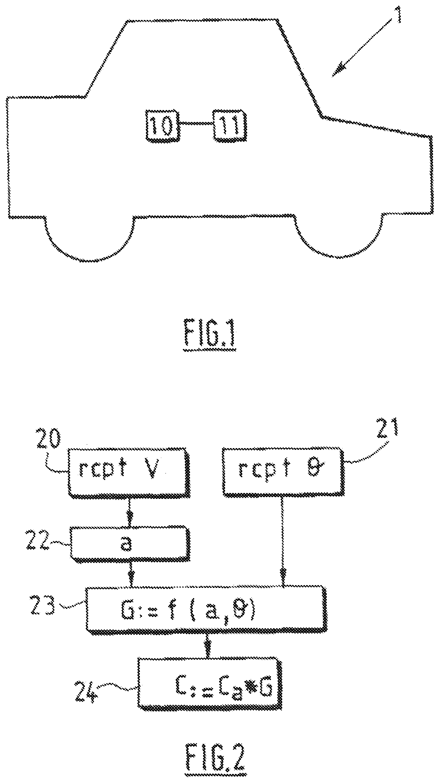

En référence à la figure 1, un véhicule automobile 1, par exemple un véhicule électrique, une voiture de sport, ou autre, comprend un dispositif d'assistance de direction 11, du type connu de l'art antérieur, agencé pour déterminer des valeurs de couple d'assistance en fonction de la valeur de couple volant et de la vitesse du véhicule.

Le véhicule 1 comprend en outre un dispositif de gestion d'assistance de direction 10, recevant en entrée les valeurs de couple d'assistance issues du dispositif d'assistance de direction 11, et recevant en outre en entrée des valeurs d'angle volant et des valeurs d'accélération et des valeurs de vitesses de roues non motrices issues d'un système ESC non représenté.

L'organigramme de la figure 2 illustre un fonctionnement de ce dispositif 11.

En référence à la figure 2, le procédé comprend une étape de réception 20 d'une ou deux valeurs de vitesses issues de capteurs mesurant la vitesse de respectivement une ou deux roues non motrices du véhicule. Ces valeurs peuvent par exemple être reçues d'un système ESC.

Le procédé comprend une étape 22 de dérivation permettant d'estimer une valeur d'accélération du véhicule à partir des valeurs de vitesse reçues au cours du temps. On peut prévoir d'effectuer une dérivation temporelle, selon des procédés connus en soi.

Par ailleurs, le procédé comprend une étape 21 consistant à recevoir une valeur d'angle volant issue par exemple d'un capteur d'angle volant.

Le procédé comprend en outre une étape 23 consistant à déterminer une valeur de gain en fonction de la valeur d'accélération et de la valeur d'angle au volant.

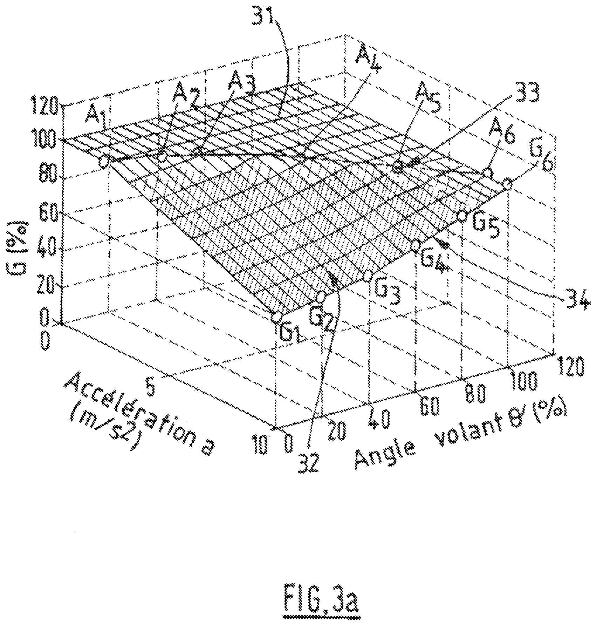

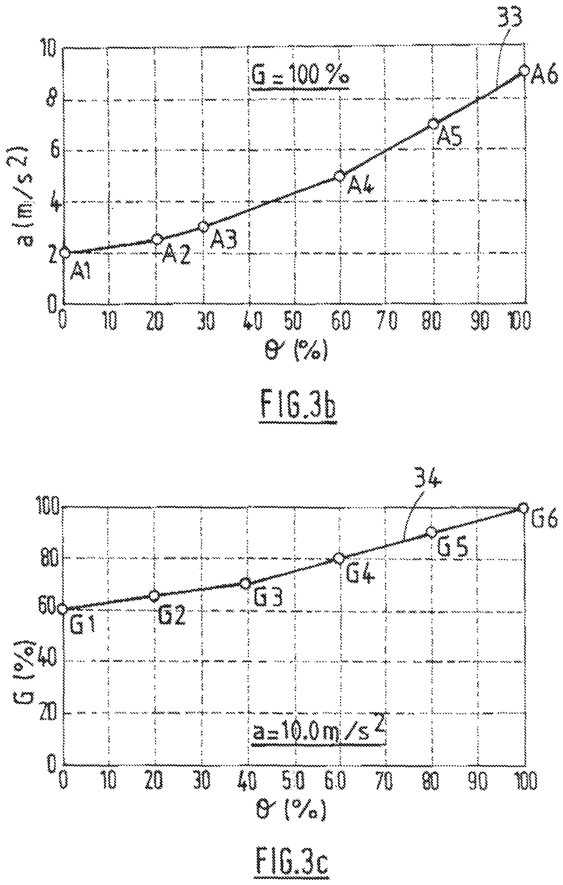

Cette étape met en oeuvre une cartographie. Les graphiques des figures 3a, 3b et 3c permettent d'illustrer un exemple de réalisation de cette étape 23.

La figure 3a montre ainsi des exemples de valeurs de gain en fonction de valeurs d'accélération et en fonction de valeurs d'angle au volant.

Dans cet exemple, les valeurs d'accélération sont entre 0 et 10 mètres par seconde au carré (m/s²), et les valeurs d'angle au volant sont entre 0 et 120 %. Le gain est exprimé en pourcentage, un gain de 100% correspondant à une valeur égale à 1.

Ces valeurs de gain ont été déterminées empiriquement. Comme on peut le relever, les valeurs de gain de cette cartographie définissent une première zone 31, pour laquelle le gain est égal à 100 %, et une deuxième zone 32, pour laquelle le gain est susceptible de prendre des valeurs inférieures à 100 %. La limite entre ces deux zones est sensiblement constituée par la courbe 33, laquelle correspond aux valeurs limites d'accélération et d'angle au volant pour lesquelles le gain est toujours égal à 100 %.

Cette courbe 33 est reprise sur la figure 3b.

Dans cet exemple, on pourra prévoir de conserver en mémoire :
- un pluralité de valeurs de doublets accélération, angle volant de cette courbe 33, par exemple six valeurs de doublets correspondant aux points A1, A2, A3, A4, A5 A6, et
- un ensemble de valeurs de doublets gain, angle volant correspondant à la courbe 34 de la figure 3a, par exemple six valeurs de couple correspondant aux points G1, G2, G3, G4, G5, G6.

Cette figure 3c montre six points de la courbe 34, cette courbe 34 correspondant à une valeur d'accélération maximale de 10 m/s².

Ainsi, lors de l'étape 23 de la figure 2, on commence par déterminer si le doublet valeur d'accélération reçue, valeur d'angle au volant reçu, est au-dessous de la courbe 33 de la figure 3b ou non.

Ceci peut être effectué en estimant une valeur d'angle limite à partir de la valeur d'accélération reçue de sorte que le point correspondant au doublet valeur d'accélération reçue, valeur d'angle limite soit sur la courbe 33. Cette estimation peut être effectuée par interpolation, à partir des valeurs de doublets stockées en mémoire. Puis on compare la valeur d'angle reçue à la valeur d'angle limite afin de savoir de quel côté de la courbe 33 se situe le doublet reçu.

Alternativement, on pourrait bien entendu prévoir d'estimer une valeur d'accélération limite à partir de la valeur d'angle volant reçue et des données de la courbe 33, puis de comparer la valeur d'accélération reçue à cette valeur d'accélération limite.

S'il s'avère que ce doublet de valeurs reçues est au-dessous de cette courbe 33 de la figure 3b, alors le gain est égal à 100 %.

Dans le cas contraire, c'est-à dire si l'on se situe dans la zone 32 de la figure 3a, alors la valeur de gain est déterminée par interpolation en utilisant les points des courbes 33 et 34 stockées en mémoire.

On pourra par exemple prévoir de lire sur les courbes 33, 34 respectivement :
- une valeur d'accélération limite correspondant à la valeur d'angle volant reçue, pour laquelle le gain serait de 100%, et
- une valeur de gain minimal correspondant à la valeur d'angle volant reçue, pour laquelle l'accélération serait de 10 m/s².

Puis on estime une valeur de gain correspondant à la valeur d'accélération reçue, par interpolation linéaire d'ordre 1, 2, ou davantage, entre ces deux points limites.

Pour revenir à la figure 2, une fois le gain estimé, on adapte au cours d'une étape 24 la valeur de couple d'assistance reçue du dispositif d'assistance au volant en multipliant cette valeur de couple d'assistance par la valeur de gain déterminée à l'étape 23.

Ainsi, si la valeur de gain est égale à 100 %, la valeur de commande d'assistance de direction est égale à la valeur de couple d'assistance. En revanche, dans le cas contraire, c'est-à-dire en cas d'accélération couplée à un angle au volant suffisamment élevé, la valeur de commande sera plus faible que la valeur de couple d'assistance.

Ces étapes 20 à 24 peuvent être répétées régulièrement. On pourra par exemple mettre en place une boucle, avec des étapes classiques et non représentées, d'initialisation, de test de sortie de boucle, et d'incrémentation, pour parcourir les étapes 20 à 24 de façon répétée.

En particulier, l'étape de dérivation 22 permettant de déterminer une valeur d'accélération pourra mettre en oeuvre des valeurs de vitesses reçues au cours d'un (ou plusieurs) cycle précédent et des valeurs de vitesses reçues au cours du cycle courant.

Selon une première variante non représentée, on peut prévoir de garder en mémoire la valeur de gain déterminée au cours d'un cycle précédent. Si la valeur de gain du cycle courant est égale à 100 %, alors que la valeur de gain du cycle précédent est inférieure à cette valeur, on pourra prévoir de mettre à un (« set » en anglais) un drapeau de détection de fin d'adaptation.

Lorsque ce drapeau est 1, on peut prévoir de passer en mode d'inactivation d'adaptation pendant une durée prédéterminée. Ainsi, pendant cette durée prédéterminée, par exemple 5 secondes, on pourra prévoir qu'au cours de l'étape 23, le gain soit systématiquement égal à 1, et ce, quelles que soient les valeurs d'accélération et d'angle au volant reçues aux étapes 21 et 22.

Selon une autre variante de réalisation, ou en complément, on pourra prévoir à chaque cycle d'incrémenter un compteur tant que la valeur de gain est inférieure à 1 et de remettre ce compteur à zéro lorsque la valeur de gain est égale à 1. On pourra en outre prévoir de comparer la valeur de ce compteur à un seuil. Lorsque la valeur de compteur atteint le seuil, on pourra prévoir de passer en mode de désactivation de l'adaptation pendant une autre durée déterminée, par exemple une minute, cinq minutes, ou autre. Ainsi, si l'assistance au volant est adaptée pendant trop longtemps, on interdit cette adaptation, car une adaptation trop longue peut provenir de valeurs erronées de l'accélération.

Alternativement on pourrait prévoir, plutôt que d'estimer une durée pendant laquelle le gain est inférieur à 1, de comparer l'accélération à un seuil et d'estimer une durée pendant laquelle l'accélération est supérieure à ce seuil. Si cette durée excède un seuil prédéterminé, alors on interdit l'adaptation de l'assistance au volant. On suppose en quelque sorte que des valeurs d'accélération trop élevées pendant trop longtemps ne peuvent être qu'erronées.

## Revendications

1. Procédé de gestion d'assistance de direction d'un véhicule automobile comprenant une étape consistant à :
déterminer (23, 24) une valeur de commande d'assistance de direction en fonction d'une valeur d'accélération du véhicule et d'une valeur d'angle volant du véhicule,
déterminer (23) une valeur de gain en fonction de la valeur d'accélération du véhicule et de la valeur d'angle volant du véhicule,
**caractérisé en ce que** ledit procédé comprend une étape supplémentaire consistant à :
appliquer (24) la valeur de gain à une valeur initiale de couple d'assistance pour obtenir la valeur de commande d'assistance de direction.

2. Procédé selon la revendication 1, dans lequel la valeur de gain est déterminée en utilisant une cartographie.

3. Procédé selon la revendication 2, comprenant une étape consistant à :
conserver en mémoire une pluralité de valeurs de doublets accélération, angle volant, ladite pluralité de valeurs de doublets correspondant à une courbe délimitant une zone pour laquelle la valeur de gain est égale à une valeur prédéterminée.

4. Procédé selon l'une des revendications 2 ou 3, comprenant une étape consistant à:
conserver en mémoire un ensemble de valeurs de doublets gain, angle volant, correspondant à une valeur d'accélération prédéterminée.

5. Procédé selon l'une des revendications 1 à 4, comprenant des étapes consistant à :
détecter des situations de fin d'adaptation de la commande d'assistance de direction à l'accélération, et
suite à ladite détection, passer dans un mode de désactivation de l'adaptation, dans lequel on affecte au gain une valeur prédéterminée.

6. Procédé selon l'une des revendications 1 à 5, comprenant des étapes consistant à :
estimer une durée d'adaptation continue de la commande d'assistance,
comparer la durée estimée à un seuil, et
si la durée estimée atteint ou dépasse ledit seuil, interdire l'adaptation de la commande d'assistance de direction en imposant au gain une valeur prédéterminée.

7. Procédé selon l'une des revendications 1 à 6, comprenant une étape consistant à :
recevoir (20) des valeurs de vitesse de capteur et correspondant à une ou deux roues non motrices du véhicule.

8. Dispositif de gestion d'assistance de direction (10) d'un véhicule automobile (1) comprenant :
des moyens de réception d'une valeur d'accélération du véhicule,
des moyens de réception d'une valeur d'angle volant, et
des moyens de traitement pour déterminer (23) une valeur de gain en fonction de la valeur d'accélération du véhicule et de la valeur d'angle volant du véhicule,
**caractérisé en ce que** ledit dispositif comprend :
des moyens pour appliquer (24) la valeur de gain à une valeur initiale de couple d'assistance pour obtenir une valeur de commande d'assistance de direction

9. Véhicule automobile (1) comprenant le dispositif de gestion d'assistance de direction (10) selon la revendication 8.

## Patentansprüche

1. Verfahren zur Verwaltung der Servolenkung eines Kraftfahrzeugs, das einen Schritt enthält, der darin besteht:
einen Servolenkungssteuerwert abhängig von einem Beschleunigungswert des Fahrzeugs und von einem Lenkradwinkelwert des Fahrzeugs zu bestimmen (23, 24),
einen Verstärkungswert abhängig vom Beschleunigungswert des Fahrzeugs und vom Lenkradwinkelwert des Fahrzeugs zu bestimmen (23),
**dadurch gekennzeichnet, dass** das Verfahren einen zusätzlichen Schritt enthält, der darin besteht:
den Verstärkungswert an einen Servomoment-Anfangswert anzuwenden (24), um den Servolenkungssteuerwert zu erhalten.

2. Verfahren nach Anspruch 1, wobei der Verstärkungswert durch Verwendung eines Kennfelds bestimmt wird.

3. Verfahren nach Anspruch 2, das einen Schritt enthält, der darin besteht:
eine Vielzahl von Werten von Beschleunigungs-, Lenkradwinkel-Dubletten zu speichern, wobei die Vielzahl von Dubletten-Werten einer Kurve entspricht, die eine Zone begrenzt, in der der Verstärkungswert gleich einem vorbestimmten Wert ist.

4. Verfahren nach einem der Ansprüche 2 oder 3, das einen Schritt enthält, der darin besteht:
eine Einheit von Verstärkungs-, Lenkradwinkel-Dubletten zu speichern, die einem vorbestimmten Beschleunigungswert entsprechen.

5. Verfahren nach einem der Ansprüche 1 bis 4, das Schritte enthält, die darin bestehen:
Situationen des Endes der Anpassung der Servolenkungsteuerung an die Beschleunigung zu erfassen, und
nach der Erfassung in eine Betriebsart der Deaktivierung der Anpassung überzugehen, in der der Verstärkung ein vorbestimmter Wert zugewiesen wird.

6. Verfahren nach einem der Ansprüche 1 bis 5, das Schritte enthält, die darin bestehen:
eine kontinuierliche Anpassungsdauer der Servosteuerung zu schätzen,
die geschätzte Dauer mit einer Schwelle zu vergleichen, und
wenn die geschätzte Dauer die Schwelle erreicht oder überschreitet, die Anpassung der Servolenkungssteuerung zu verbieten, indem der Verstärkung ein vorbestimmter Wert aufgezwungen wird.

7. Verfahren nach einem der Ansprüche 1 bis 6, das einen Schritt enthält, der darin besteht:
Sensorgeschwindigkeitswerte zu empfangen (20), die einem oder zwei nicht angetriebenen Rädern des Fahrzeugs entsprechen.

8. Servolenkung-Verwaltungsvorrichtung (10) eines Kraftfahrzeugs (1), die enthält:
Empfangseinrichtungen eines Beschleunigungswerts des Fahrzeugs,
Empfangseinrichtungen eines Lenkradwinkelwerts, und
Verarbeitungseinrichtungen, um einen Verstärkungswert abhängig vom Beschleunigungswert des Fahrzeugs und vom Lenkradwinkelwert des Fahrzeugs zu bestimmen (23),
**dadurch gekennzeichnet, dass** die Vorrichtung enthält:
Einrichtungen zum Anwenden (24) des Verstärkungswerts an einen Servomoment-Anfangswert, um einen Servolenkungssteuerwert zu erhalten.

9. Kraftfahrzeug (1), das die Servolenkung-Verwaltungsvorrichtung (10) nach Anspruch 8 enthält.

## Claims

1. Method for managing the power steering of a motor vehicle comprising a step consisting of:
determining (23, 24) a power steering control value as a function of an acceleration value of the vehicle and of a steering wheel angle value of the vehicle,
determining (23) a gain value as a function of the acceleration value of the vehicle and of the steering wheel angle value of the vehicle,
**characterized in that** said method comprises an additional step consisting of:
applying (24) the gain value to an initial assistance torque value in order to obtain the power steering control value.

2. Method according to Claim 1, in which the gain value is determined using a mapping.

3. Method according to Claim 2, comprising a step consisting of:
retaining in memory a plurality of values of acceleration and steering wheel angle doublets, said plurality of values of doublets corresponding to a curve delimiting a zone for which the gain value is equal to a predetermined value.

4. Method according to either of Claims 2 and 3, comprising a step consisting of:
retaining in memory a set of values of gain and steering wheel angle doublets, corresponding to a predetermined acceleration value.

5. Method according to one of Claims 1 to 4, comprising steps consisting of:
detecting situations of end of adaptation of the power steering control to the acceleration, and
following said detection, changing into a mode of deactivation of the adaptation, in which the gain is allocated a predetermined value.

6. Method according to one of Claims 1 to 5, comprising steps consisting of:
estimating a duration of continuous adaptation of the power steering control,
comparing the estimated duration with a threshold, and if the estimated duration reaches or exceeds said threshold, prohibiting the adaptation of the power steering control by imposing a predetermined value on the gain.

7. Method according to one of Claims 1 to 6, comprising a step consisting of:
receiving (20) sensor speed values corresponding to one or two non-drive wheels of the vehicle.

8. Device for managing the power steering (10) of a motor vehicle (1) comprising:
means of receiving an acceleration value of the vehicle,
means of receiving a steering wheel angle value, and
processing means for determining (23) a gain value as a function of the acceleration value of the vehicle and of the steering wheel angle value of the vehicle,
**characterized in that** said device comprises:
means of applying (24) the gain value to an initial value of assistance torque in order to obtain a power steering control value.

9. Motor vehicle (1) comprising the device for managing the power steering (10) according to Claim 8.
